## Europäisches Patentamt
## European Patent Office
## Office européen des brevets

(11) Numéro de publication: **0 310 503**
**A1**

(12) **DEMANDE DE BREVET EUROPEEN**

(21) Numéro de dépôt: **88402450.6**

(22) Date de dépôt: **28.09.88**

(51) Int. Cl.⁴: **A 23 B 7/04**
**F 25 D 11/00, F 25 D 17/02**

(30) Priorité: **30.09.87 FR 8713512**

(43) Date de publication de la demande:
**05.04.89 Bulletin 89/14**

(84) Etats contractants désignés:
**AT BE CH DE ES GB GR IT LI LU NL SE**

(71) Demandeur: **INGENOV**
**28, rue de la Redoute**
**F-92260 Fontenay aux Roses (Hauts de Seine) (FR)**

(72) Inventeur: **Lara, Jean**
**19 rue de l'Ormeaux**
**Jaunay-Clan (Vienne) (FR)**

(74) Mandataire: **Cabinet Pierre HERRBURGER**
**115, Boulevard Haussmann**
**F-75008 Paris (FR)**

(54) Installation de réfrigération de produits et, notamment de légumes frais.

(57) Installation de réfrigération de produits et, notamment, de légumes frais, caractérisée en ce qu'elle se compose d'au moins deux caissons (22) recevant les produits à traiter et pourvus de moyens (32, 33, 41) amenant, sur ces produits, de l'air et/ou de l'eau qui, pour au moins l'un des caissons, est réfrigérée, ces caissons étant alignés et étant pourvus d'ouvertures latérales opposées (23, 24) permettant, par un déplacement horizontal dans un seul sens, l'introduction des produits à traiter dans le premier caisson, leur transfert du premier caisson vers le second et l'évacuation des produits traités du second caisson, les ouvertures de ces caissons étant pourvues de portes d'obturation (25) coulissant dans le plan de ces ouvertures.

Fig. 3

EP 0 310 503 A1

**Description**

## Installation de réfrigération de produits et, notamment, de légumes frais

L'invention concerne une installation de réfrigération de produits et, notamment, de légumes frais.

L'installation est caractérisée en ce qu'elle se compose d'au moins deux caissons recevant les produits à traiter et pourvus de moyens amenant, sur ces produits, de l'air et/ou de l'eau réfrigérée, ces caissons étant alignés et étant pourvus d'ouvertures latérales opposées permettant, par un déplacement horizontal dans un seul sens, l'introduction des produits à traiter dans le premier caisson, leur transfert du premier caisson vers le second et l'évacuation des produits traités du second caisson, les ouvertures de ces caissons étant pourvues de portes d'obturation coulissant dans le plan de ces ouvertures.

Suivant une autre caractéristique de l'invention, chaque caisson est constitué par une structure en tunnel à chaque extrémité duquel est prévu un cadre pourvu d'une porte coulissant dans son plan.

Suivant une autre caractéristique de l'invention, chaque caisson est pourvu à sa base de moyens pour le transfert de palettes de support des produits.

Suivant une autre caractéristique de l'invention, un module d'essorage est aligné avec les caissons en étant disposé en regard de l'ouverture d'évacuation des produits traités du dernier caisson de l'alignement, ce module d'essorage se composant d'une structure de support montée à rotation sur un axe vertical et pourvue de moyens pour le positionnement des produits au cours de l'essorage, des moyens étant en outre prévus pour amener, puis évacuer, par un déplacement horizontal, les produits traités issus du dernier caisson.

Suivant une autre caractéristique de l'invention, l'installation comporte un circuit fermé d'alimentation en eau pourvu d'une unité de réfrigération, de traitement et de recyclage de l'eau.

Suivant une autre caractéristique de l'invention, l'installation est disposée à l'intérieur d'un véhicule, la paroi de ce véhicule étant pourvue de fentes pour le passage des portes coulissantes en position d'ouverture.

L'invention est représentée à titre d'exemple non limitatif sur les dessins ci-joints dans lesquels :

- la figure 1 est une vue en élévation de l'ensemble du véhicule conforme à l'invention,
- la figure 2 est une vue en perspective partielle représentant le poste de chargement des produits à traiter, situé à l'arrière du véhicule,
- la figure 3 est une vue en perspective de deux caissons alignés et assemblés,
- la figure 4 représente les dispositifs d'aspersion d'eau d'un caisson,
- la figure 5 représente, en perspective schématique, les moyens prévus dans les caissons pour le transfert des produits,
- la figure 6 est une vue en perspective schématique du module d'essorage situé en regard du dernier caisson de l'alignement,

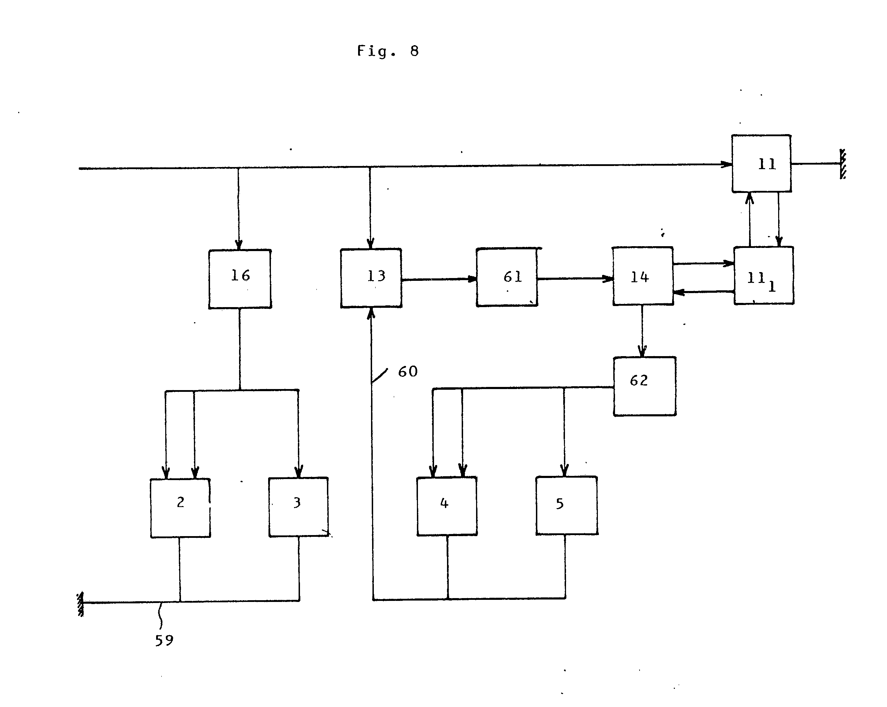

- la figure 7 est une vue en perspective schématique de l'ouverture située sur l'un des côtés du véhicule pour l'évacuation des produits traités,
- la figure 8 représente le circuit d'eau du véhicule, alimentant les divers caissons,
- la figure 9 est le schéma de principe d'un circuit modifié d'alimentation en eau des caissons de traitement des produits.

La présente invention a en conséquence pour but la réalisation d'une installation qui assure le traitement des produits agro-alimentaires, notamment dans le domaine des fruits, les légumes et des fleurs, en effectuant un lavage et une pré-réfrigération de ces produits, de manière automatique et sur le lieu même de la récolte.

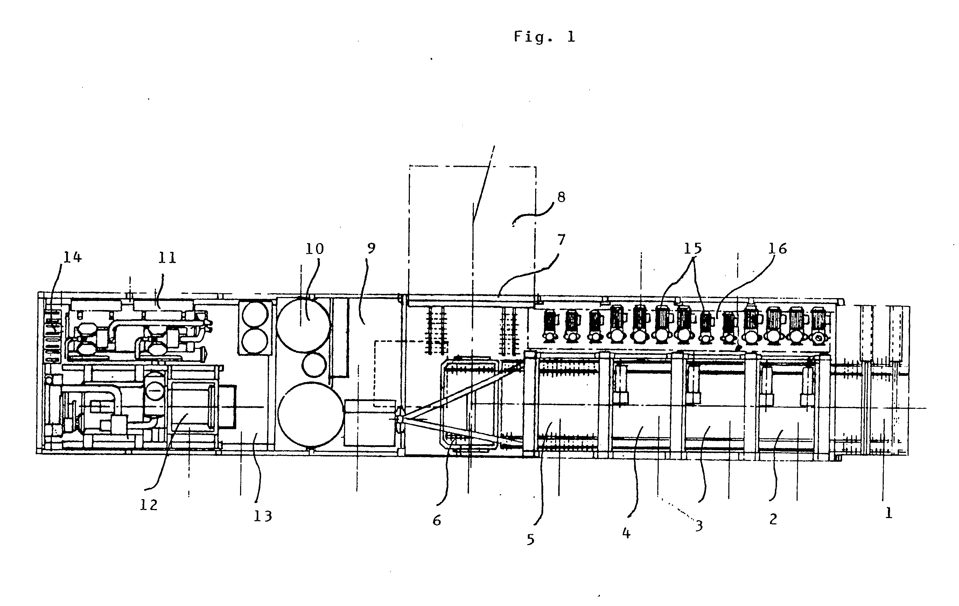

Cette installation (voir figure 1) est implantée sur le plateau d'un véhicule routier qui comporte à cet effet l'ensemble des éléments nécessaires au transfert automatique et au traitement des produits, disposés par exemple sur des palettes, ce véhicule étant également pourvu des organes moteurs assurant son autonomie, si bien que pour le mettre en oeuvre, il suffit de disposer d'une source d'eau extérieure.

Le véhicule conforme à l'invention est construit de façon à assurer la circulation continue des produits à traiter depuis leur ramassage et jusqu'à leur chargement dans des camions frigorifiques, après traitement, sans interruption de la chaîne de froid.

Ainsi, les conteneurs recevant les produits à traiter sont pris en charge automatiquement sur une plate-forme d'entrée, pour être traités en continu suivant un cycle défini par l'utilisateur sur un pupitre de commande. Une fois le cycle de traitement terminé, les conteneurs sont évacués dans un tunnel en regard duquel se dispose un camion frigorifique qui est ainsi chargé par les produits traités et qui effectue leur transport.

Le véhicule représenté sur la figure 1 comporte ainsi une plate-forme d'entrée et de chargement 1 située à l'arrière du véhicule, quatre modules alignés 2, 3, 4 et 5 de traitement des produits, ces modules assurant, pour le module 2, le prélavage des produits par immersion ou aspersion ; pour le module 3, le rinçage par aspersion ; pour le module 4, la pré-réfrigération par immersion ou aspersion ; pour le module 5, la pré-réfrigération par aspersion. Dans l'alignement de ces modules et du côté de l'ouverture de sortie des produits traités, est disposé un module d'essorage 6, l'ouverture de sortie des produits de ce module d'essorage étant disposée devant l'ouverture latérale 7 du véhicule, en regard de laquelle se place le tunnel 8 permettant d'amener les produits traités dans un camion frigorifique.

La partie avant du véhicule, c'est-à-dire celle qui est située au-delà de l'ouverture 7 par rapport à la zone de chargement 1, est pourvue schématiquement d'un poste de commande et de contrôle 9, des dispositifs de traitement de l'eau 10, d'un groupe frigorifique 11, d'un groupe électrogène 12, d'un réservoir d'eau brute 13 et d'un réservoir d'eau traitée 14.

Latéralement aux modules 2, 3, 4 et 5, sont prévues des pompes 15 alimentant en eau les divers modules. Au-dessus de ces pompes, est disposé un réservoir d'eau de prélavage 16, cette eau étant destinée au module de prélavage 2 et au module de rinçage 3.

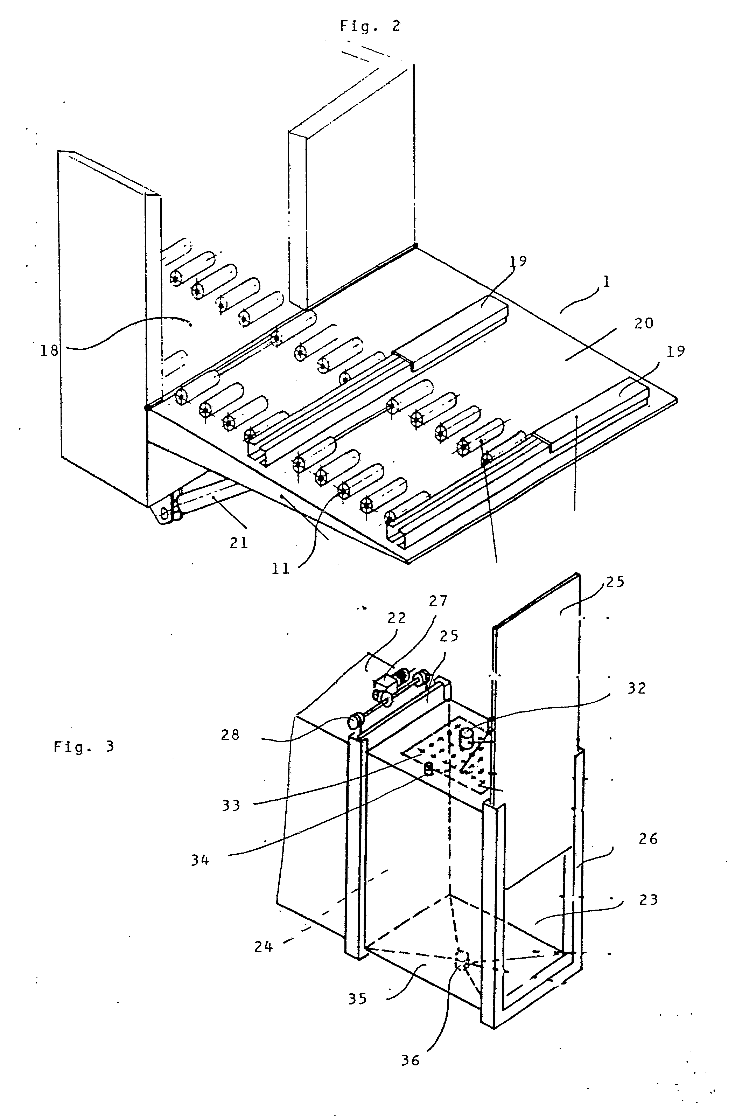

Le poste de chargement 1 (voir figure 2) est alimenté en conteneurs par un opérateur disposant d'un chariot élévateur qui dépose côte à côte deux ensembles de deux palettes superposées (non représentées). Le premier ensemble est posé sur des rouleaux motorisés 17 situés en regard de l'ouverture arrière 18 du véhicule, afin de permettre l'introduction de ce premier ensemble de palettes à l'intérieur du caisson de prélavage dont l'ouverture d'introduction jouxte l'ouverture 18. Le deuxième ensemble de palettes est posé en attente sur des rails de transfert escamotables 19, afin de pouvoir prendre la place du premier ensemble une fois que celui-ci a été pris en charge dans le cycle de traitement. Ce poste de chargement 1 est installé sur un hayon 20 monté pivotant à l'arrière du véhicule. Des vérins 21 sont prévus pour placer ce hayon 20 en position verticale contre l'ouverture 18 lorsque le véhicule n'est pas mis en oeuvre pour le traitement des produits et doit, au contraire, être déplacé sur route.

Les modules 2, 3, 4 et 5 qui sont de structure identique, se composent chacun (voir figure 3) d'un tunnel métallique 22 pourvu de deux ouvertures latérales opposées 23 et 24 équipées de portes 25 coulissant dans le plan de ces ouvertures et délimitant, lorsqu'elles sont fermées, des caissons étanches à l'intérieur des tunnels 22.

Dans l'exemple représenté, ces portes 25 coulissent verticalement dans des cadres 26 pourvus de rainures de guidage et de joint d'étanchéité. Ces cadres sont pourvus de moyens permettant indifféremment leur montage à une extrémité d'un tunnel ou entre deux tunnels adjacents, afin de former une suite de caissons étanches séparés les uns des autres par une porte coulissant verticalement.

Des fentes sont prévues dans le toit du camion pour permettre le passage des portes 25 lors de leur mise en position ouverture. L'ouverture et la fermeture des portes est obtenue, pour chaque module, à partir d'un moto-réducteur 27 qui est relié par des poulies et câbles 28 à la zone inférieure des portes.

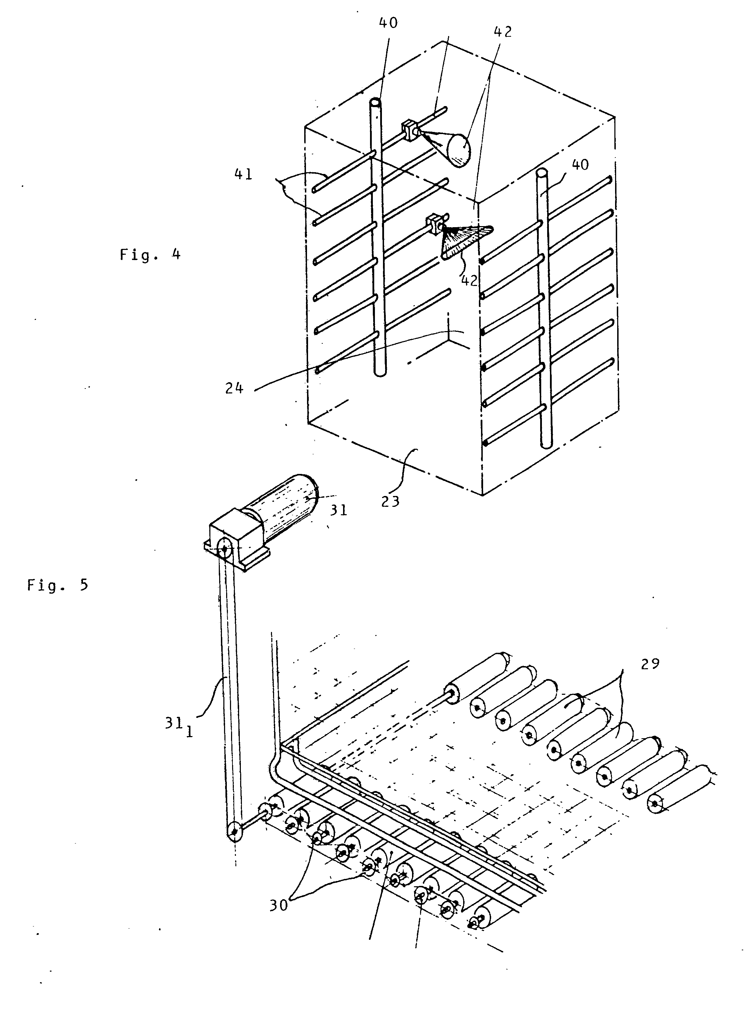

Chaque tunnel de traitement est équipé dans sa partie inférieure (voir figure 5) de deux rangées de rouleaux métalliques 29 entraînés en rotation par un ensemble de pignons et de chaînes 30 afin d'assurer l'introduction d'un conteneur dans le premier module puis d'entraîner les conteneurs d'un module de traitement au module suivant et, enfin, d'évacuer le conteneur hors du dernier module. L'entraînement de ces rouleaux de chacun des caissons est assuré par un moto-réducteur 31 situé à l'extérieur et en partie haute du caisson, afin d'entraîner par une transmission à pignons et chaîne $31_1$ les rouleaux 29 qui sont situés à l'intérieur et en partie basse du caisson.

Des détecteurs (non représentés) sont prévus à l'intérieur des caissons afin de détecter la présence du conteneur des produits à traiter et de couper l'alimentation du moto-réducteur lorsqu'il occupe une position correcte.

On constate donc que, par cette construction des caissons alignés pourvus de portes opposées étanches, on peut déplacer horizontalement les produits à traiter d'un caisson au caisson suivant et cela dans un cycle de traitement continu, les opérations de traitement effectuées dans l'un des caissons étant indépendantes, du fait des portes étanches, des traitements effectués dans les caissons adjacents.

L'ouverture et la fermeture automatiques des portes et l'alimentation des moto-réducteurs 27 se fera suivant un cycle programmé.

La partie supérieure des caissons reçoit une arrivée d'eau centrale à grand débit 32, munie d'un brise-jet 33 constitué par une enceinte à fond perforé qui occupe la majeure partie de la partie haute de chaque caisson. Ce brise-jet 33 permet une immersion rapide des produits sans les détériorer.

Ces caissons sont également pourvus de deux arrivées d'eau latérales 34 alimentant des circuits d'aspersion.

La base 35 des caissons est réalisée en forme de trémie et comporte une ouverture d'évacuation d'eau 36 pourvue d'un bouchon d'obturation et d'une crépine. Ce bouchon (non représenté) est associé à un organe moteur commandant son ouverture ou sa fermeture en fonction du cycle de commande programmé.

Sur la figure 4, on a représenté schématiquement les dispositifs d'aspersion d'eau disposés à l'intérieur de chaque caisson. Ce dispositif se compose de deux ensembles placés latéralement contre la paroi interne du tunnel entre les ouvertures d'entrée 23 et de sortie 24 des produits, ces ensembles comprenant un collecteur central vertical 40 sur lequel viennent se raccorder des rampes horizontales 41 supportant des buses d'aspersion interchangeables 42. La forme du jet de ces buses est adaptée à la nature des produits à traiter.

De préférence, chaque caisson constituant un module de traitement comporte l'ensemble des dispositifs permettant un traitement par immersion et par aspersion, l'utilisateur programmant dans chaque cas le fonctionnement suivant le produit à traiter et le résultat à obtenir.

Le cycle de traitement par une installation comportant quatre caissons sera, de préférence, le suivant :

Le premier caisson (module N° 2) assurera le lavage des produits par immersion ou aspersion, suivant le choix de l'utilisateur ; le deuxième caisson (module N° 3) effectuera un rinçage par aspersion, l'eau utilisée dans ces deux caissons n'étant pas préalablement traitée et étant évacuée après utilisation.

Par contre, les deux derniers caissons (modules N° 4 et 5) assureront le refroidissement des produits, par aspersion ou immersion pour le module N° 4, et par pluie fine pour le module N° 5, l'eau utilisée dans ces deux derniers caissons étant de l'eau traitée et réfrigérée circulant en circuit fermé.

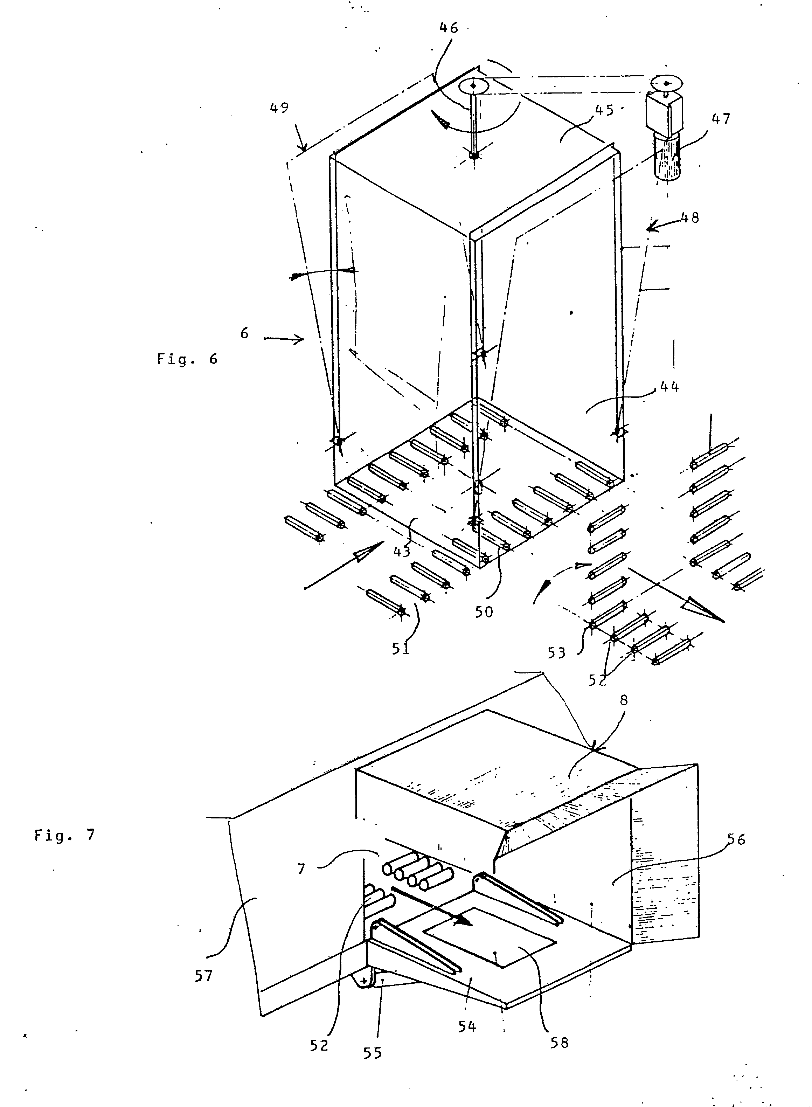

L'ouverture de sortie 24 du dernier des caissons alignés (module N° 5) est disposée en regard d'une station d'essorage (voir figure 6) qui est pourvue d'une ouverture 43 d'entrée des produits à essorer et d'une ouverture 44 de sortie des produits essorés, ces ouvertures étant disposées perpendiculairement l'une à l'autre, de façon que l'ouverture 43 soit située en regard de l'ouverture de sortie du dernier des caissons alignés, tandis que l'ouverture 44 est située en regard de l'ouverture latérale 7 du véhicule.

Ce poste d'essorage se compose d'une structure 45 montée à rotation par des portions d'axe supérieur et inférieur 46. Un moto-réducteur 47 est prévu pour entraîner en rotation la structure 45, la vitesse de rotation étant suffisamment importante pour éjecter l'eau des produits sous l'action de la force centrifuge.

Cette structure est équipée de deux bras opposés 48, 49 à serrage concentrique, destinés à immobiliser l'ensemble de conteneurs superposés.

La base de cette station d'essorage est pourvue de rouleaux 50 pour l'introduction et la sortie des conteneurs, tandis que, en regard des ouvertures d'introduction 43 et de sortie 44, sont prévus des ensembles de rouleaux de transfert 51, 52 qui sont montés pivotants sur des axes 53 afin de se placer en position verticale pour permettre la rotation de la station d'essorage.

L'ouverture de sortie 44 des produits essorés et les moyens de transfert à rouleaux 52 sont disposés en regard de l'ouverture latérale 7 et du tunnel 8.

Devant l'ouverture 7 est prévu un hayon 54 relevable sous l'action de vérins 55. Au-dessus de ce hayon est disposé le tunnel 8 en matériau souple isolant assurant une liaison étanche entre la carrosserie 57 du véhicule et un camion frigorifique de transport des produits traités.

De préférence, le hayon est pourvu d'un dispositif de pesée 58 pour le pesage des produits traités.

Le circuit d'eau du véhicule, qui alimente les caissons, est représenté sur la figure 8.

L'eau nécessaire au prélavage dans les caissons des modules 2 et 3, provient du réservoir tampon 16 alimenté par une station de pompage, les eaux usées étant rejetées par les canalisations 59, par exemple dans un bassin de décantation.

L'eau nécessaire à la pré-réfrigération des produits dans les caissons des modules 4 et 5, provient d'un réservoir 14 dont l'eau est sans cesse refroidie grâce à une circulation au travers d'un échangeur $11_1$ relié à un groupe réfrigérant 11. Avant d'arriver dans ce réservoir de refroidissement 14, l'eau provenant de la station de pompage passe par un réservoir tampon 13. A ce réservoir, aboutit également une canalisation 60 récupérant l'eau utilisée dans les modules 4 et 5 afin de la recycler.

L'eau provenant de la station de pompage ou l'eau recyclée provenant des modules 4 et 5, est amenée au réservoir 14 par un ensemble de traitement 61 qui comprend :
- un préfiltrage éliminant les particules les plus importantes en suspension dans l'eau par un procédé de tourbillon ;
- des filtres à sable destinés à retenir à travers les couches de sable de différentes granulométries, les impuretés non éliminées par le préfiltrage ;
- des filtres à poches constitués par des poches interchangeables jetables, assurant le filtrage des dernières particules très fines restant dans l'eau.

Avant d'être amenée dans les modules 4 et 5, l'eau issue du réservoir 14 traverse un étage 62 de débactérisation mettant en oeuvre un stérilisateur à rayonnement ultra-violet.

L'échangeur $11_1$ est, de préférence, basé sur le principe d'une pompe à chaleur eau/eau. Il reçoit la quantité d'eau nécessaire à son fonctionnement d'un réservoir tampon et la rejette ensuite sur les terrains où elle peut être utilisée pour irriguer les cultures voisines.

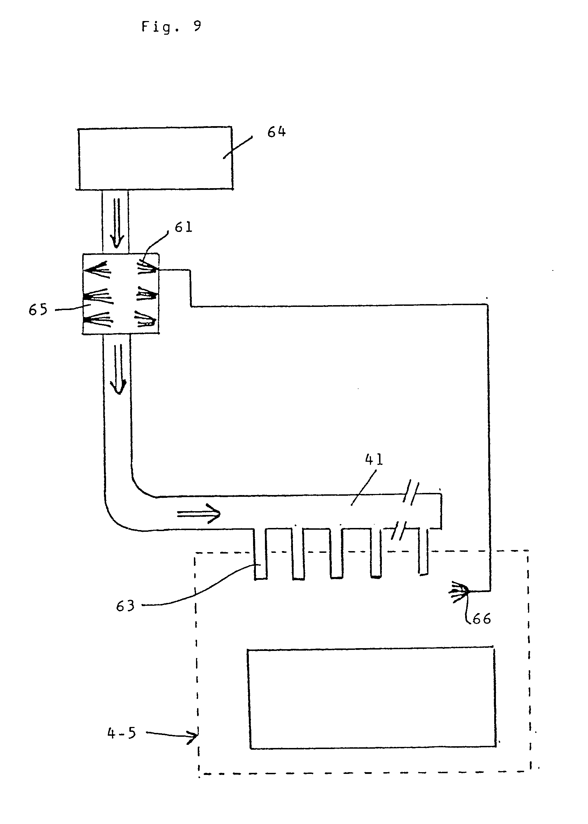

On notera que, dans l'installation décrite, les modules 4 et 5 de pré-réfrigération, agissent par immersion des produits dans de l'eau réfrigérée ou par aspersion d'eau réfrigérée. On notera cependant que l'aspersion des produits pourra être effectuée en les mettant en contact, non pas avec de l'eau froide, mais avec de l'air humide réfrigéré. Pour cela (voir figure 9), les rampes d'aspersion 41 comportent des buses 63 projetant de l'air froid et humide. Dans ce cas, le véhicule comporte une centrale à air contrôlé 64 assurant le filtrage de l'air ambiant pour obtenir un air de très bonne qualité bactériologique qui est pulsé au travers d'un brouillard très fin d'eau traitée formé dans une enceinte 65. L'air chargé de gouttelettes d'eau est alors envoyé par les rampes 41 sur les produits à traiter. Il est également possible de mettre en oeuvre un deuxième ensemble d'humidification de l'air, qui consiste à pulvériser, par des buses 66, un autre brouillard d'eau traitée devant les arrivées d'air 63 à l'intérieur des caissons.

## Revendications

1) Installation de réfrigération de produits et, notamment, de légumes frais, caractérisée en ce qu'elle se compose d'au moins deux caissons (22) recevant les produits à traiter et pourvus de moyens (32, 33, 41) amenant, sur ces produits, de l'air et/ou de l'eau qui, pour au moins l'un des caissons, est réfrigérée, ces caissons étant alignés et étant pourvus d'ouvertures latérales opposées (23, 24) permettant, par un déplacement horizontal dans un seul sens, l'introduction des produits à traiter dans le premier caisson, leur transfert du premier caisson vers le second et l'évacuation des produits traités du second caisson, les ouvertures de ces caissons étant pourvues de portes d'obturation (25) coulissant dans le plan de ces ouvertures.

2) Installation selon la revendication 1, caractérisée en ce que chaque caisson est constitué par une structure en tunnel à chaque extrémité duquel est prévu un cadre (26) pourvu d'une porte (25) coulissant dans son plan.

3) Installation selon la revendication 2, caractérisée en ce que le cadre (26) est pourvu de moyens permettant indifféremment son montage à une extrémité d'un tunnel et entre les deux ouvertures adjacentes (23, 24) des tunnels de deux caissons.

4) Installation selon l'une quelconque des revendications précédentes, caractérisée en ce que les portes (25) sont montées coulissantes verticalement et constituent, en position de fermeture, des portes étanches.

5) Installation selon la revendication 4, caractérisée en ce que chaque caisson est pourvu à sa base de moyens (29) pour le transfert des produits.

6) Installation selon l'une quelconque des revendications précédentes, caractérisée en ce que chaque caisson est pourvu, dans sa zone supérieure, d'une enceinte à fond horizontal perforé (33) dans laquelle débouche un conduit d'alimentation en eau (32), ce fond couvrant la majeure partie de la section horizontale interne du caisson.

7) Installation selon l'une quelconque des revendications précédentes, caractérisée en ce que chaque caisson est pourvu, à l'extérieur du caisson, dans sa partie haute, d'un moteur électrique (31) relié par une transmission (31₁) aux moyens (29, 30) de transfert des produits disposés à l'intérieur du caisson dans sa partie basse.

8) Installation selon l'une quelconque des revendications précédentes, caractérisée en ce que au moins l'une des faces latérales de chaque caisson est pourvue de rampes (41) et/ou de buses de projection (42) pour l'aspersion des produits.

9) Installation selon l'une quelconque des revendications précédentes, caractérisée en ce que un module d'essorage (6) est aligné avec les caissons en étant disposé en regard de l'ouverture d'évacuation des produits traités du dernier caisson de l'alignement, ce module d'essorage se composant d'une structure de support (45) montée à rotation sur un axe vertical et pourvue de moyens (48, 49) de positionnement des produits au cours de l'essorage, des moyens (50) étant en outre prévus pour amener, puis évacuer par un déplacement horizontal, les produits traités issus du dernier caisson.

10) Installation selon la revendication 9, caractérisée en ce que des moyens de transfert (51, 52) sont prévus en regard de l'ouverture d'introduction et d'évacuation des produits et du module d'essorage, ces moyens étant mobiles, au moins en partie, pour interrompre la liaison avec le module d'essorage lors de l'essorage.

11) Installation selon l'une quelconque des revendications précédentes, caractérisée en ce qu'elle comporte un circuit d'alimentation en eau (13) pourvu d'une unité de réfrigération (11, 11₁), de traitement (61, 62) et de recyclage (60) de l'eau.

12) Installation selon l'une quelconque des revendications précédentes, caractérisée en ce qu'elle est disposée à l'intérieur d'un véhicule, la paroi de ce véhicule étant pourvue de fentes pour le passage des portes coulissantes en position d'ouverture.

13) Installation conforme à la revendication 12, caractérisé en ce que le véhicule est pourvu d'une ouverture arrière (18) en regard de l'ouverture (23) d'introduction des produits à traiter dans le premier des caissons alignés, le module d'essorage (6) situé en regard du dernier des caissons alignés présentant une ouverture (43) d'introduction des produits à essorer et une ouverture (44) de sortie des produits essorés, ces ouvertures étant perpendiculaires, l'ouverture de sortie (44) des produits essorés étant située en regard d'une ouverture (7) prévue sur l'un des côtés latéraux du véhicule.

Fig. 1

Fig. 2

Fig. 3

Fig. 4

Fig. 5

Fig. 6

Fig. 7

Fig. 8

EP 0 310 503 A1

Fig. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 923 889 (CARRIER ENGINEERING CO. LTD.) <br> * En entier * <br> --- | 1,2,3,5 ,8 | A 23 B 7/04 <br> F 25 D 11/00 <br> F 25 D 17/02 |
| A | GB-A- 460 097 (WOOD) <br> * En entier * <br> --- | 1,2,4,7 | |
| A | FR-A-1 309 859 (JOHN THOMPSON (WOLVERHAMPTON) LTD.) <br> * En entier * <br> --- | 1,5,6,9 ,11 | |
| A | US-A-2 256 745 (MAGNUSON) <br> * En entier * <br> --- | 1,5,6, 11 | |
| A | US-A-4 532 774 (BURNS) <br> * En entier * <br> --- | 1,12 | |
| A | GB-A- 339 172 (ZAROTSCHENZEFF) <br> * En entier * <br> --- | 8,11 | |
| A | US-A-3 961 925 (RHOAD) <br> --- | | |
| A | EP-A-0 156 401 (WEASEL, Jr.) <br> --- | | A 23 B <br> F 25 D |
| A | US-A-3 604 217 (SPEAR) <br> --- | | |
| A | US-A-4 434 623 (WEASEL, Jr.) <br> ----- | | |

DOMAINES TECHNIQUES RECHERCHES (Int. Cl.4)

**Le présent rapport a été établi pour toutes les revendications**

| Lieu de la recherche | Date d'achèvement de la recherche | Examinateur |
|---|---|---|
| LA HAYE | 03-01-1989 | SILVIS H. |